# EUROPEAN PATENT SPECIFICATION

(11) **EP 2 646 176 B1**
(45) Date of publication and mention of the grant of the patent: **16.10.2019**
(21) Application number: 11754870.1
(22) Date of filing: 08.09.2011
(51) Int. Cl.: B08B 3/02, H02S 40/38, H02S 40/42, H02S 40/10, F24S 40/20, F24S 50/00

(54) **Solar module with cleaning system comprising light sensor**
Solarmodul mit Reinigungssystem umfassend einen Lichtensor
Module solaire avec système de nettoyage comprenant un détecteur de lumière

(30) Priority: 08.09.2010 DK 201000797 P
(43) Date of publication of application: 09.10.2013
(73) Proprietor: Saphire APS, 1820 Frederiksberg (DK)
(72) Inventor: SAFIR, Yakov, 1820 Frederiksberg (DK)
(74) Representative: Budde Schou A/S
(86) International application number: PCT/EP2011/065519
(87) International publication number: WO 2012/032107

(56) References cited:
- WO-A2-2009/150466
- JP-A- 2010 161 144
- US-A1- 2007 240 278
- US-A1- 2009 241 994
- US-A1- 2009 266 353

## Description

The present invention relates to clusters of solar PV modules and other renewable energy sources together with battery or other storage systems. The clusters are situated alongside roads or streets and each energy cluster distributes the electrical energy for consumption along and next to the road through a mini grid. The energy can be used for various purposes, such as road lights at night, billboards, telecommunication stations, telecom transmitters, repeaters and receivers, service stations and more In other words it relates to clusters or hubs of solar powered energy storages and grids providing electricity alongside and nearby the roads

The background for the present invention relates to among other issues the following needs and inconveniences.

Along roads electricity is normally transferred through cables from a main grid to lamps along the road in order to provide light at night In areas where the costs are high for digging and installing cables or in areas where the costs are high for connecting to the nearest transformer or in areas where the distance to the main grid is too far, the solution is to set up independent poles which have their own battery and power source via a solar PV module, hereafter called "Stand-alone PV light pole"

One example of such stand alone PV light module may be found in US 2011/0084646A1 disclosing an off-grid LED lighting system Further, US 2009/0315404A1 discloses a solar plant with a plurality of photovoltaic modules for generating a power to be fed in a multi phase grid.

Further prior art include:
∘ "Models for a Stand-Alone PV system" published by Risø National Laboratory, Roskilde, December 2000
∘ "Slope Stability Hazard Assessment and Mitigation methodology Along Eastern Desert Aswan-Cairo Highway, Egypt", published by Earth Sci., Vol 20, No. 2, pp. 161-181, 2009
∘ "Stand-Alone Photovoltaic Lighting Systems, A Decision-Maker's guide, Volume 1: Photovoltaic Lighting Applications, published by Florida Solar Energy Center/University of Central Florida, September 1998
∘ "SUNNY ISLAND System Guide", published by the company SMA

When mounting a battery and a solar PV module on the same pole as the lamp, the PV module must not be shadowed and thus stay high The battery must have enough energy capacity and become heavy It must be mounted on the lamp pole so it does not cause any damage by spilling or falling and it must be accessible for maintenance. If placed in the ground, problems such as heating, weight and access disappear, but since the lamp post is 8-12m high, DC resistance losses in the cable reduces the power and the module and battery must be made larger All these issues cause extra costs. Also the module may need extra maintenance at the height of 8-12 meters, especially in spring where flowers provide dust or in dusty and sandy areas such as deserts. Furthermore bird droppings occur since birds like to sit on top of the lamp posts.

The dust and/or dirt rapidly reduces the efficiency and output of the module, often to zero output, and thus the battery is deep discharged and loses its lifetime rapidly The dust is not controllable and can cause the lights to malfunction and the battery to be useless after only a few months instead of after 5 years. The passing vehicles on the road adjacent the lamp will generate exhaust fumes and whirl up the road dust and thereby contribute to increase the total amount of dust affecting the solar PV module.

In road sections where trees, cliff sides, hill sides or mountain sides are present, shadow will occur in large parts, if not all parts of the day. Therefore the solar module cannot be used. These road sections alongside cliffs, hills and mountains are normally also the most dangerous parts for traffic and are often far from the main grid. The shadow in tunnels obviously also eliminates the use of solar modules as a one lamp stand alone solution.

Free standing batteries and PV modules are also issues for theft and the thieves have easy access and easy escape routes..

In order to achieve stable light luminance every night on the road and in order to avoid changing the battery every year or every second year, high capacity is needed and discharge is limited to minimum 50%. The battery is however heated and thus looses capacity. The result in some warm areas is that the battery size must be doubled . This incurs further costs to a stronger pole and to a more expensive battery and often to larger solar modules

In particular for illumination of roads, safety is a major issue. With malfunctioning or unreliable lamps for the roads, severe accidents can happen and will cause serious human injuries and also deadly accidents and incur large financial losses.

It is thus an object to provide methods and systems for road lighting and local energy consumption which do not suffer from the low reliability of traditional off-grid systems and which are provided at a cost being considerably lower compared to traditional grid connected systems.

All photovoltaic systems need frequent cleaning. Typically, this involves periodically sending an employee with a brush to the location of the solar modules and manually wipe the surface of the modules. This involves a high cost and additionally it cannot be ensured that cleaning is needed before sending the employee and/or the modules may become dirty again very quickly after the employee has left the site of the solar modules.

In the prior art several solutions for cleaning solar modules without manual labour exist. US 2010/0307479 discloses the use of a gantry robot having a sliding air knife for blowing off debris from an array. This has the drawback that moving parts must be used. US 2009/0266353 discloses an automatic cleaning module comparing intensity detected by an environmental light sensor and a received light sensor, and determines if the solar cell panel needs to be cleaned. However, a false indication that no cleaning is required may be received in case the solar module is only partially covered with dust and not covered with dust at the location of the received light sensor. US 2007/240278 discloses an automatic cleaning system including a pressure tank and a pressurizer. The pressurizer increases the pressure within the pressure tank based on absorbed solar energy. A release valve coupled to a jet directs expelled air. WO 2009/150466 discloses a solar energy assembly for collecting and converting solar energy. A cleaning system may be provided to clean the assembly. The cleaning system may direct cleaning fluid onto the assembly. US 2009/241994 discloses a solar cell device including a solar cell panel having an outer surface and a cleaning system. The cleaning system includes a cleaning component configured for sputtering a cleaning fluid to clean the outer surface, and a controller. JP 2010 161144 discloses a solar cell module and a cleaning unit for cleaning the solar cell module by reciprocating the cleaning unit between upper and lower edges of the solar cell module.

It is thus an object of the present invention to provide reliable and effective methods and systems for cleaning a solar module.

The above need and object together with numerous other needs and objects which will be evident from the below detailed description of the road lights and energy system according to an example not forming part of the present invention obtained by a cluster of consumption points such as, but not limited to, lamps combined with hubs of bundled solar PV modules and other renewable energy sources together with battery or other storage systems.

The energy hubs with renewable energy production units are situated at regular intervals alongside roads such as motorways, streets or security routes or paths for people and each energy hub distributes the electrical energy for consumption along and next to the road through a mini grid. A mini grid is characterised as being an independent electrical grid, which is not connected to the main grid. The energy from the Power Oasis, which is also known as an Energy Oasis and a RE hub, can be used for various purposes, such as road lights at night, billboards, telecommunication stations, telecom transmitter stations, telecom repeater stations and telecom receiver stations, service stations and more. In other words it relates to clusters or hubs of solar powered energy storages and grids providing electricity alongside and nearby the roads.

The Renewable Energy hub can provide energy to lamps and other uses or electrical consumptions along a certain distance along the road. By "road" in the present invention is meant any type and size of road from a small path or street to a large multi lane motorway. The distance of road covered by every hub could vary from a few meters to several kilometres, depending on the cost efficiency and load profile of the consuming items and other factors that form the hub and transmission lines.

The Renewable Energy hub will consist of typically the following basic elements:
- a renewable energy and power source, such as solar photovoltaic (hereafter PV) modules or wind turbine or biogas unit.
- a mounting structure upon which the renewable energy power sources are placed. The mounting structure could be any solid system such as steel structure, fibreglass, containers, cement and could also be tracking systems that provide the optimal angle towards the sun at any time. The mounting system could be combined with mirrors and other reflecting units that concentrate the sunlight onto the solar modules,
- a compressed air system or systems that can provide air and air knives automatically to remove dust, sand and dirt from the solar module surfaces or the reflector surfaces whenever needed.
- an electronic regulator that provides optimum electrical efficiency by maximum peak power tracking and by controlling the balance between energy consumption, energy storage capacity and energy produced,
- a storage system that can store the produced energy for the needed consumption volume and time, be it a few hours or several weeks,
- an inverter system that can transform the electricity stored in the battery or storage units into the electrical current voltage characteristics AC or DC as requested by the consumers of the electrical grid. The electrical output could be 1, 2 or 3 phased AC or any convenient electricity supply. It could also be scaled up through a transformer, if long distances are required..
- sensors and central electronics control units that can survey all the system components and provide intelligent management of the various units and variable factors Together the electronic control units form a central electronics management station. This station can provide management of the mini grid that distributes the energy and can interact intelligently with sensors and control units along the mini grid transmission lines This interaction can also be used for using the mini gird as a smart grid.
- housing units, for all components in the RE hub, that can protect against weather, excessive heat accumulation, rain, hail, dust, winds, theft etc. The housing units could be among many types of containers, brick buildings, underground compartments etc.
- An ground area large enough to contain all the necessary components of the Energy Oasis and able to provide expansion of the Energy Oasis if needed at a later stage The expansion can be doubled or tripled or multiplied by larger factors..

Typical basic components, some of them optional, along the road would be as follows.
- cables for transmission of the electrical power across and along the road, providing electricity for the lamps that light the road at night or when needed.. The cables can be installed and mounted in any way that is normal to a standard grid. Typically either in the ground or on the same poles on which the lamps are mounted On each pole the number of cables mounted and type and thickness mounted will depend on the most efficient sizing and design of the road lighting units. In some cases only one cable is necessary in other cases possibly 9 cables could be installed,
- lamps for the illumination of the road, preferably LED lamps, but any other type of road lamps can be used,
- mounting arm for each lamp, as is standard for road and city street lamp mounting. Also fittings from the mains and holder for the lamp will be needed at each lamp pole,
- lamps and mounting unit for billboards, typically LED lamps will be used,
- sensors on various points along the road informing both the individual lamp and the central Energy Oasis hub about how to optimise the system. The sensors can inform about power consumption and usage, about weather conditions, about speeding, about malfunctioning of lamps and about accidents
- a telephone communication line that cross links complementary Energy Oasis and that can safely provide information of urgent matters.

Compared to the needs and requirements of existing systems, the benefits from the embodiment are several. Among them are the following: The high costs for having individual solar PV modules and batteries mounted on each individual pole and battery and regulator are reduced drastically, by instead using the Energy Oasis together with standard cabling between the poles. As an example, one RE hub for 10 km of double road, could have 100 kWp of installed solar modules for covering the use of 600 LED lamps on a double sided motorway. It may need 1000 kWh of battery storage capacity and the lamps may need 100W per LED lamp. The only extra costs would be for the cables alongside the road, mounted on the poles or in the ground.

The problems with shadowing, dirt, dust and sand and maintenance issues can easily be handled automatically without high costs as would have been necessary for the single stand-alone module & battery mounted on each lamp.

The heating up of the batteries is easily avoided with cost effective solutions in a hub either by natural ventilation or by forced cooling or air-conditioning or by solar cooling Also the batteries can be buried underground to minimise the heating Typically the battery sizing of the stand-alone PV light pole can be reduced to half the capacity This reduces the energy consumption and thus the costs for batteries and for solar modules, which makes the Power Oasis solution much more reliable and efficient and cost effective

In particular the maintenance and control of the batteries and all components in the Power Oasis hub are much more efficient and cost effective than on the equivalent stand-alone PV light pole systems. Take alone the removal of dust and dirt on the high poles of these systems compared to a one collective central array of solar modules at the Energy Oasis which can be rinsed in several ways and within a short working process. It is also affordable and possible in the Energy Oasis to generate and use compressed air to remove the dust and dirt or by brush systems or by water rinsing

Whereas in the stand-alone PV light pole system, a tracking system and/or a concentrator system is not applicable and too expensive, in the Energy Oasis, this is quite feasible and all kinds of solar tracking systems can be used in order to gain more light. The same applies for concentrators of solar light and for reflectors and mirrors. All kinds of efficient energy output boosting appliances are cost effective in the large system of the Energy Oasis, whereas this cannot be applied for the (small) stand alone PV light pole systems

The Road Energy Oasis is ideal for growing infrastructures Because the system includes both Energy Oasis and the mini grid along the road, it is possible to make the Road Energy Oasis as a flexible system that can be adjusted according to the power consumption along the road. The Road Energy Oasis may double or triple or more according to increasing consumption of energy and growing infrastructure along the road. It could be because of higher energy for the lamps, more lamps, new side roads, new service stations, new telecom stations, water pumping etc The square meter land area at the hub where the solar modules or the renewable energy sources are placed can be extended as the energy demand grows along the road. For example if the hub covers 10 km motorway and a new road of 5 km high way is built and intercepts the existing road, the number of solar modules can be increased by 50% at the hub and thus the land area will be almost 50% larger at the energy hub. It will also be possible to increase the number of cables or the thickness of the cables along the road in order to match the higher power demand from the new road section

In a further example the road Energy Oasis can provide power and energy to remote consumption usage in rural areas or along the road Some of the energy demanding users and consumptions that are likely to benefit from the Road Energy Oasis are,
- 1.: Small factories for mineral water production with independent PV power supply
- 2.: Service stations and shopping centres
- 3.: Small businesses for service industry or manufacturing
- 4.: New villages or cities or agricultural areas
- 5.: Health clinics and small hospitals
- 6.: Recreation areas and parks
- 7.: Desalination systems for rural areas
- 8.: Water rinsing systems of brackish
- 9.: Water or desalination
- 10.: Water purification
- 11.: Ground water pumping and storage systems
- 12.: Irrigation systems preferably with drip irrigation
- 13.: Telecom systems
- 14.: Billboards
- 15.: Local cooling of drinking water or food products
- 16.: Storage of energy in local battery hubs for local supply
- 17.: Charging of electrical or hybrid cars
- 18.: Safety lights
- 19.: Warning lights for warning boards
- 20.: Early warning systems
- 21.: Control cameras
- 22.: Warning lamps
- 23.: Emergency telephones
- 24.: First aid emergency station
- 25.: Lights on mountain tops warning against low flying air traffic.

In a further example not forming part of the present invention is that the RE hubs or the Energy Oasis can be interlinked with each other along the road For example a road of 250 km with 4 lanes, could be covered by 25 separate Energy Oases or RE hubs As each hub has its own mini grid, the various hubs can, when required, be interconnected so that they together form a much larger grid than for example the 10 kilometres covered by each mini grid The potential of this interconnection will be to avoid inclusion of transformers for large distance transmission lines, and to open up for more flexible infrastructure growth as some areas along the road may need much more energy than other areas

When many mini grids are interconnected and if the main grid is being extended to the areas where the Road Energy Oasis are, then the interconnected mini grid can be connected to the maingrid as well All the batteries and/or energy storage systems will then act as a fast energy pool and will reduce the demand for fossil fuel production units at peak demand on the main grid The reduction of the peak demand is known to be a very efficient cost reduction instrument

As the mini grids develop, since they are well monitored, storage management based and organically grown along with the infrastructure, the chances are high that the Road Energy Oasis mini grids have implemented smart grid principles Thus when and if connection occurs with the main grid, the benefits of smart grid are already implemented on a large sale.

The above need and object together with numerous other needs and objects which will be evident from the below detailed description of a solar module according to claim 1 comprising:
a shallow enclosure comprising a back plate and a corresponding front plate, the front plate being transparent to solar light and defining an inwardly oriented surface and an outwardly oriented surface,
a plurality of solar cells being accommodated between the front plate and the back plate and adjacent the inwardly oriented surface of the front plate, the solar cells being exposed to solar light at the front plate,
a nozzle being fixedly mounted on the outwardly oriented surface of the front plate or on a frame located at the outwardly oriented surface of the front plate, the nozzle being adapted to generate an air stream, preferably a laminar air stream across the outwardly oriented surface of the front plate and having an overall flow direction parallel to the front plate for removing dust from the outwardly oriented surface of the front plate,
a pressurization system connected to the nozzle for supplying the nozzle with pressurized air, and
a control valve having a closed state preventing air from flowing from the pressurization system to the nozzle and an open state allowing air to flow from the pressurization system to the nozzle..

The solar module is typically mounted so that the front plate is facing the sun. The front plate is transparent in order for the solar irradiation to reach the solar cells. The front plate may e.g. be made of plastics or glass. The solar cells are capable of converting solar irradiation to electrical energy by utilizing the photo electric effect.

The individual solar cells may be coupled in series and or be parallel in order to reach higher voltages and currents than a single cell is capable of. The nozzle is mounted on the outwardly facing surface of the front plate and/or on a frame surrounding the front plate Preferably, several nozzles are used and distributed equidistantly over the outwardly oriented surface of the first plate. The nozzles have a shape such that they are capable of generating a so called air knife, i.e. a high intensity air stream. The air stream is typically laminar, at least across a portion of the front plate. The nozzle may thus define one or more tiny holes or slots allowing compressed air to exit at a high velocity. The nozzle may be located slightly above the outwardly oriented surface of the front plate and directed such that the stream will flow along the outwardly oriented surface for pushing any dust or similar solid or liquid objects away from the outwardly oriented surface. The air stream is preferably activated periodically, i.e for a few seconds whenever the front surface is deemed to be dusty, by opening the control valve Afterwards, the control valve is closed again.

The nozzle is fed by pressure lines which either are lead across the outwardly oriented surface or which, preferably, enter though the front plate to the back of the solar module The pressurization system may comprise an electrically driven compressor feeding the pressure line

According to a further embodiment, the pressurization system comprises an air tank capable of storing a specific volume of air at atmospheric pressure, the air tank being located adjacent the back plate for receiving solar heat energy from the solar cells for heating the specific volume of air thereby causing the specific volume of air to assume an elevated pressure.. In place of a compressor, the pressurized air may be achieved by utilizing the heat energy generated in the module during solar irradiation. The tank may be filled with cold air e.g. during the night During the day when the air is heated, it will assume an elevated pressure, assuming the volume is kept constant. The air in the tank may then during the day be used as a source of pressurized air

According to a further embodiment, the air tank comprises a connector for connecting the air tank to a corresponding air tank of a neighbouring solar module. It has been observed that within a solar array, dust may accumulate on some solar modules, while others are free from dust Thus, the air stored in a tank of a clear solar module may be used for cleaning another solar module

According to the invention, the solar module further comprises:
a light sensor located in a dust free location, the light sensor being capable of generating a light intensity value corresponding to the intensity of the solar light at the outwardly oriented surface of the front plate, and
a control circuit for generating an energy value corresponding to the energy generated by the plurality of solar cells, the control circuit being capable of calculating a ratio between the energy value and the light intensity value, the control circuit being capable of causing the control valve to assume the open state when the ratio falls below a predetermined ratio The dust free location may be e.g. a housing or enclosure located near the front plate and oriented in the same direction as the front plate One light sensor may further be used to generate a light intensity value which is valid for nearby solar modules of the same solar array. The control circuit may be e.g. a microprocessor reading the light intensity value and the energy value of the solar module. When the front plate is covered with dust, less solar irradiation will reach the solar cells and thus the energy output of the solar cells/solar module will be reduced compared to a clean solar module The predetermined ratio may be set in relation to a maximum energy loss which is deemed to be tolerated

According to the invention, the light sensor is located within a sealed enclosure, the enclosure being capable of periodically exposing the light sensor to solar light The enclosure or housing may have a shutter or a gate which is normally closed but which opens temporarily for generating the light intensity value For avoiding dust within the housing, depending on the sensitivity of the light sensor, it may be sufficient to open the shutter for a few milliseconds only

According to a further embodiment, the predetermined ratio is between 50% and 99%, preferably between 60% and 95%, more preferably between 70% and 90%, most preferably between 75% and 85%, such as 80%. It is contemplated that a ratio of 100% corresponds to a perfectly clean front surface Any dust located on the outwardly oriented surface will reduce the energy output of the solar module and thus the determined ratio will be lower that 100%. A predetermined ratio below 50% constitutes a severe waste problem which may be solved by performing a cleaning operation Depending on the power used for each cleaning operation, an optimal ratio for cleaning may be determined In order to prevent too frequent cleaning, for most practical applications, a ratio of 80% may be used

According to a further embodiment, the solar module further comprises heat absorbers located within the shallow enclosure between the solar cells and the back plate By including heat absorbers, thermal energy as well as electrical energy may be collected from the solar module.

According to a further embodiment, the outwardly oriented surface define a slope from a lower edge to an upper edge, the solar module including a matrix of nozzles from the lower edge to the upper edge, the nozzles being fixedly mounted on the outwardly oriented surface of the front plate or on a frame located at the outwardly oriented surface of the front plate, the nozzles being adapted to generate an air stream, preferably a laminar air stream, across the outwardly oriented surface of the front plate and having an overall flow direction parallel to the front plate and from the upper edge to the lower edge for removing dust from the outwardly oriented surface of the front plate. Preferably, the nozzles are oriented such that the dust is removed with the aid of gravity, i.e. along the slope of the module

The above need and object together with numerous other needs and objects which will be evident from the below detailed description of the road lights and energy system according to an example not forming part of the present invention, are according to the present invention obtained by a method of operating a solar module, the solar module comprising.
a shallow enclosure comprising a back plate and a corresponding front plate, the front plate being transparent to solar light and defining an inwardly oriented surface and an outwardly oriented surface,
a plurality of solar cells being accommodated between the front plate and the back plate and adjacent the inwardly oriented surface of the front plate, the solar cells being exposed to solar light at the front plate,
a nozzle being fixedly mounted on the outwardly oriented surface of the front plate or on a frame located at the outwardly oriented surface of the front plate, the nozzle being adapted to generate an air stream, preferably a laminar air stream, across the outwardly oriented surface of the front plate and having an overall flow direction parallel to the front plate for removing dust from the outwardly oriented surface of the front plate,
a pressurization system connected to the nozzle for supplying the nozzle with pressurized air, and
a control valve having a closed state preventing air from flowing from the pressurization system to the nozzle and an open state allowing air to flow from the pressurization system to the nozzle,
the method comprising the steps of:
opening the control valve thereby allowing air to flow from the pressurization system to the nozzle and generate an air stream, preferably a laminar air stream, across the outwardly oriented surface of the front plate and having an overall flow direction parallel to the front plate for removing dust from the outwardly oriented surface of the front plate, and
closing the control valve.

The above need and object together with numerous other needs and objects which will be evident from the below detailed description of the road lights and energy system according to an example not forming part of the present invention, are according to a further aspect of the present invention obtained by a method of determining an initiation of a cleaning operation of a solar module, the method comprising the steps of
generating a light intensity value corresponding to the intensity of the solar light at the outwardly oriented surface of the front plate by using the light sensor,
generating an energy value corresponding to the electrical energy generated by the plurality of solar cells by using the control circuit,
calculating a ratio between the energy value and the light intensity value by using the control circuit,
determining the initiation of a cleaning operation when the ratio falls below a predetermined ratio.

The above method is used together with the above mentioned solar module By using the energy value, the initiation of a cleaning operation may be determined when only a small portion of the front panel is covered by dust. Further, the use of a light intensity value makes the determination independent of the time of the day and the solar/cloud conditions at the location of the solar module.

The above need and object together with numerous other needs and objects which will be evident from the below detailed description of an example of the road lights and energy system not forming part of present invention, are obtained by a road fighting system comprising a power generating unit and a power consuming unit, the power consuming unit comprising
a plurality of road lights for being installed along a road, such as a main road or motorway, the plurality of road lights preferably comprise LED's being capable of illuminating at least a portion of the road, and
a power transmission line interconnecting the plurality of road lights along the road,
the power generating unit being located at a distant location in relation to the road lights, the power generating unit comprising:
a solar array comprising a plurality of solar modules for receiving solar light and converting the solar light to electrical energy,
an energy storage system for storing electrical energy, the energy storage system being located adjacent the solar array, the energy storage system preferably comprising a battery storage system comprising e.g. lead acid batteries or lithium iron phosphate batteries,
a regulator connected to the solar array, the energy storage system and the power transmission line, the regulator being configured to receive electrical energy from said solar array and deliver electrical energy to said power transmission fine, or, receive electrical energy from said solar array and deliver electrical energy to said energy storage system, or, receive electrical energy from said energy storage system and deliver electrical energy to said power transmission line.

The power transmission line preferably is a low voltage line, e g in the order of 1000V. The length of the line is preferably between 1km and 50km, such as between 5km and 20km and typically 10km. A longer transmission line will necessitate thicker cable diameters and/or the use of transformers which will increase the cost of the line. A distant location is construed to mean sufficiently remote from the road to prevent a significant portion of the dust particles originating from passing vehicles to land on the solar modules. The distance thus depends on the road quality and the number of passing vehicles, however, distances between 10m and 100m may be contemplated to be minimum distances, while distances over 1km should be avoided in order to keep transmission losses to a minimum. Preferably, underground cables are used for interconnecting the power generating unit and the power consuming unit The power transmission unit and the power consumption unit should be directly connected, i e. not via the national/regional power network.. In this way, the number of regulators/transformers may be kept to a minimum thereby reducing the losses by transformation of the current. The power generating unit is also known as an Energy Oasis. The solar array may comprise any number of solar modules depending on the consuming units The energy storage unit is preferably located below the solar modules such that it may be kept cool in the shadow of the modules The regulator receive electrical energy from the solar array and in case the electrical energy received from the solar array is not sufficient for powering the consuming units, e.g. at night when the solar irradiation is zero, the electrical energy is received from the energy storage system. The regulator delivers the electrical energy to the power transmission line and in case more electrical energy is generated than being used by the consumers, e.g. at daytime, the electrical energy is stored in the energy storage system. The electrical storage system is directly connected to the regulator

According to a further example not forming part of the present invention, the road lighting system comprising one or more further power consuming units connected to the power transmission line, the further power consuming units include e.g. a telecom station, a telecom tower, an illuminated billboard, a service station, a warning sign/lamp, a control camera and/or a water desalination/purification/pumping/rinsing system. Such systems may benefit from the Energy Oasis and thus avoid having to be connected to the national/regional grid by a long transmission line

According to a further example not forming part of the present invention, the power transmission line is connected to a neighbouring power transmission line of a neighbouring road lighting system. The transmission line may be connected to a neighbouring road lighting system in order to allow more consumers to be located in the present road lighting system or alternatively be able to deliver electrical energy to a larger neighbouring system.

According to a further example not forming part of the present invention, the power transmission line is a DC line or an AC line and an overhead line or an underground line. Optionally, an inverter is used for converting the DC from the solar module and storage system to AC which is more common in transmission lines, however, since LED's typically require DC, a DC transmission line may be equally contemplated.

According to a further example not forming part of the present invention, the road lighting system further comprises additional power generating units connected to the power transmission line and/or the solar array Such additional power generating units preferably include further solar arrays..

The above need and object together with numerous other needs and objects which will be evident from the below detailed description of an example of the road lights and energy system not forming part of present invention, are obtained by a method of operating a road lighting system comprising a power generating unit and a power consuming unit, the power consuming unit comprising.
a plurality of road lights for being installed along a road, such as a main road or motorway, the plurality of road lights preferably comprise LED's being capable of illuminating at least a portion of the road, and
a power transmission line interconnecting the plurality of road lights along the road,
the power generating unit being located at a distant location in relation to the road lights, the power generating unit comprising:
a solar array comprising a plurality of solar modules for receiving solar light and converting the solar light to electrical energy,
an energy storage system for storing electrical energy, the energy storage system being located adjacent the solar array, the energy storage system preferably comprising a battery storage system comprising e.g. lead acid batteries or lithium iron phosphate batteries,
a regulator connected to the solar array, the energy storage system and the power transmission line,
the method comprising the steps of:
receiving electrical energy from the solar array and/or the energy storage system, and
delivering electrical energy to the power transmission line and/or the energy storage system.

The above method is preferably used together with the above road lighting system.

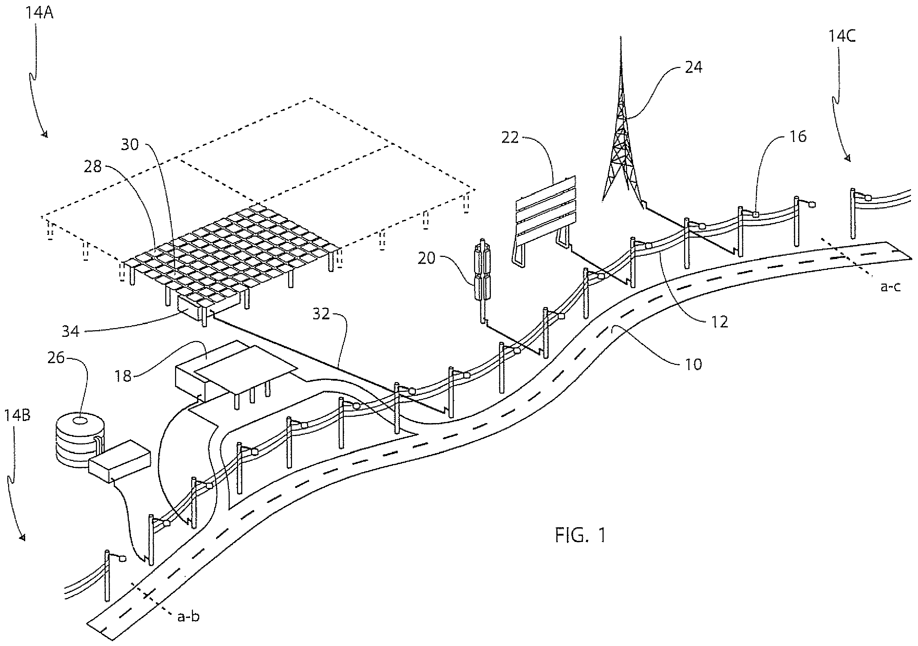

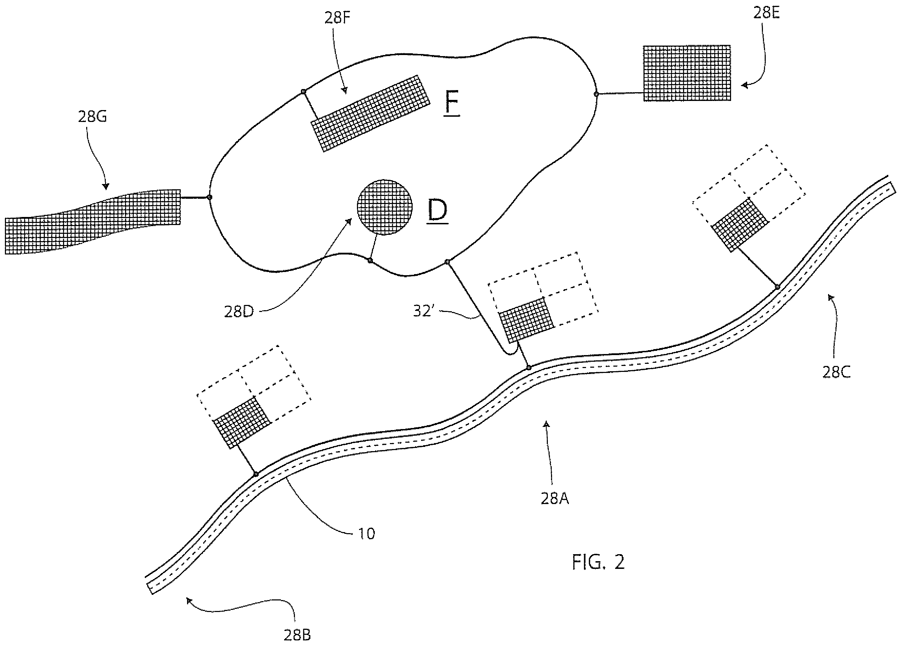

An illustration of the above mentioned variations and flexibility of the Road Energy Oasis are shown in the figures 1 and 2

### Brief description of the figures

Figure 1 illustrates a schematic view of a road lighting system not forming part of the present invention.
Figure 2 illustrates a schematic view of layout of solar arrays not forming part of the present invention
Figure 3 illustrates a schematic view of a power generating unit not forming part of the present invention.
Figure 4 illustrates a side view of a solar module according to the present invention.
Figure 5 illustrates a top view of a solar module according to the present invention
Figure 6 illustrates the determination of a cleaning operation

### Detailed description of the figures

Figure 1 illustrating a road 10 with transmission cables or lines 12 for one road lighting system or mini grid 14A and two adjoining mini grids 14B and 14C. Electrically the mini grid 14A is separated from the two adjoining other separate mini grids 14B and 14C. If necessary at a later stage, the three mini grids 14A, 14B and 14C can be interconnected at the intercept (a-b) between 14A and 14B and intercept (a-c) between 14A and 14C by adding some electronic devices and control units at (a-b) and (a-c). The other electronic control units in the system can be prepared for such an optional interconnection of the mini grids 14A, 14B and 14C. The lamp posts or poles 16 with the transmission cables 12 are used for both stretching the length of the mini grid 14A and for supplying electricity outlet points for the lamps 16 illuminating the road 10, for a service tank and service area 18 for a telecom station 20 providing coverage to mobile telephones, a billboard with lights 22, a telecommunication tower 24 powered for receiving and transmission of signals and data. The telecom tower 24 does not need any battery or storage back-up since it is available at the Energy Oasis 28. Further, a water plant 26, such as a water desalination, purification, pumping or rinsing station may be connected to the transmission cable or line 12. The Energy Oasis 28 comprise a solar array having a plurality of solar modules 30. The power from the Energy Oasis 28 or Renewable Energy Hub is transmitted through cables 32 or overhead line to the road 10 and is spread out in two directions of the road 10 This minimizes the thickness of the power cables 12, since for example 10 km of cables can be divided into two sections of 5 km each The Energy Oasis 28 is composed of solar modules covering the battery and storage station 34 and electronic regulators, controls and management system so that temperature is lowered and more protection against the weather is provided for In this illustration, the area that the solar modules 30 are covering can be extended up to four times as shown with the dotted lines, so that the energy production of the Renewable Energy Hub 28 can be four times as large if needed. If extra-back up is necessary, a diesel generator can also be interconnected to the Renewable Energy Hub 28. All equipment 34 can be placed either in the open, in compartments, in containers, in buildings or underground. If the system is built up in a modular way, it is easy to expand the system when needed.

Figure 2 illustrates how the Road Energy Oases 28A-G are placed along the road 10 and how they can expand and also spread as the infrastructure develops Along the main road are Road Energy Oasis 28A, 28B and 28C The dotted spots along the road 10 illustrate lamps The dotted lines near the energy production units illustrate that the renewable energy production area such as solar modules can be expanded. The area covering the energy oasis solar modules can have any shape, thus not necessarily rectangular As the infrastructure of roads or energy transmission lines grows, the first established Road Energy Oases 28A can be connected to other roads In the illustration, the energy hub of 28A has provided cable connection 32' to other roads with or without lamps and established electrical connection to new road energy oases 28D, 28E, 28F and 28G. Some of these new oases can be providing energy to a local community, clusters of houses or other energy consumers as described earlier The energy oases 28D - 28G do not all need to have battery storage systems They could be just energy producing units that provide extra energy to the transmission cables

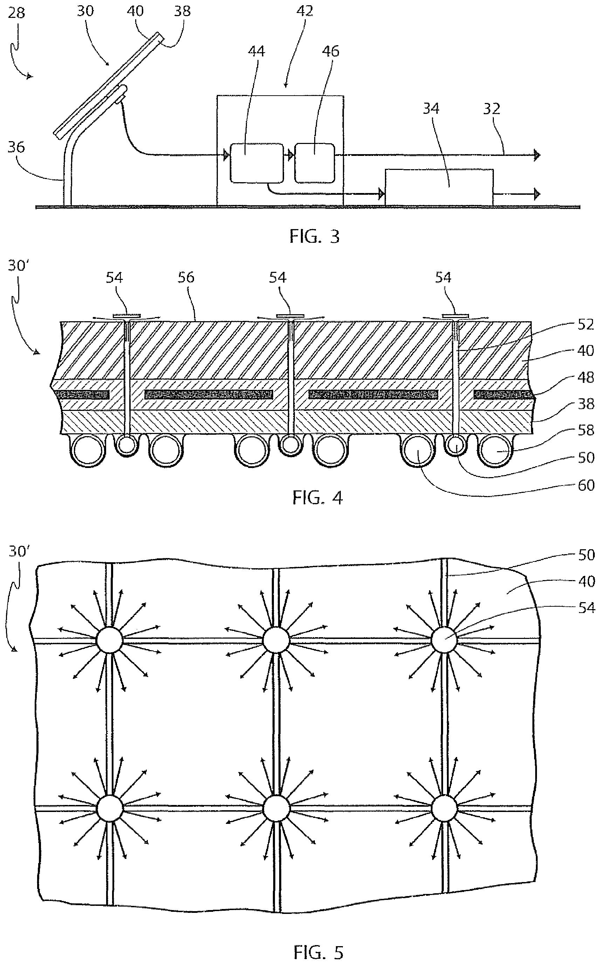

Figure 3 illustrates an energy oasis 28 not forming part of the present invention The energy oasis 28 comprises a plurality of solar modules 30 The solar modules are held a distance above ground by a holder 36 at a specific angle for optimal solar irradiation. The solar module 30 comprises a back plate 38 mounted to the holder 36 and a transparent front plate covering the back plate 38 and facing the sun The solar cells (not shown) converting the solar energy to electrical energy are located between the front plate 40 and the back plate 38 and are exposed to the solar irradiation at the front plate 40. The electrical energy in the form of a DC current from all of the solar modules 30 is sent to a control unit 42 The control unit 42 comprises a regulator 44 The regulator 44 is configured to supply electrical energy to an inverter 46 which converts the DC to an AC which may be delivered via cable 32 to the transmission line (not shown) interconnecting the lamps 16. The inverter 46 may be omitted in case the transmission line (not shown) is a DC transmission line Optionally, a transformer may be connected between the inverter 46 and the cable 32 for adjusting the voltage level of the AC Any excess electrical energy not used by the consumers is delivered directly by the regulator 44 to the battery storage system 34. When the solar modules 30 do not produce any electrical energy, e.g. during night, the regulator 44 receives electrical energy from the battery storage system 34 and delivers the electrical energy required by the lamps (not shown) and the other consumers along the transmission line (not shown).

Figure 4 illustrates a self cleaning solar module 30' comprising a transparent front plate 40, a back plate 38 and a number of solar cells 48 located therebetween. The solar module 30' comprises a pressure pipe 50 connected to the back plate 38 The pressure pipe is supplied by compressed air. The pressure pipe 50 is connected to a nozzle 54 located on the outwardly oriented surface 56 of the front plate 40 via a conduit 52 The nozzle 54 is designed and oriented such that it is able to generate a laminar air stream across the outwardly oriented surface of the front-plate 40 The air stream contacts the outwardly oriented surface 56 of the front plate 40 and has an overall flow direction parallel to the front plate 40 for removing dust from the outwardly oriented surface 56 of the front plate 40. Dust is in the present context being understood as comprising smaller debris and similar particles such as sand. The nozzle is controlled by a valve which is opened periodically when cleaning of the front plate 40 is desired. Typically, a plurality of nozzles 54 are used and the nozzles 54 are located such that they do not block solar irradiation onto the solar cells, such as e.g. at locations on the front plate 40 being in between the solar cells 48 or on a frame surrounding the front plate 40. The nozzles 54 may further be oriented such that the air stream is directed following the general downwardly oriented slope of the front plate 40 such that the removal of dust is aided by gravity The compressed air may optionally be generated by a tank 58 located at the back plate 38 The tank 58 is filled with cold air e.g. during the night, and subsequently sealed off from the environment. When the solar module 30' is heated during the day, the air within the tank 58 absorbs some of the solar heat energy which causes the air in the tank 58 to assume a higher pressure When cleaning of the front surface 40 is required, the compressed air in the tank 58 is fed to the pressure pipe 50 Optionally, heat absorbers 60 may be used for circulating e.g. oil or water for cooling the solar modules and for providing thermal energy

Figure 5 illustrates a top view of the solar module 30' For optimal cleaning of the front plate 40, the nozzles 54 are distributed as a matrix equidistantly along the outwardly oriented surface of the front plate 40.

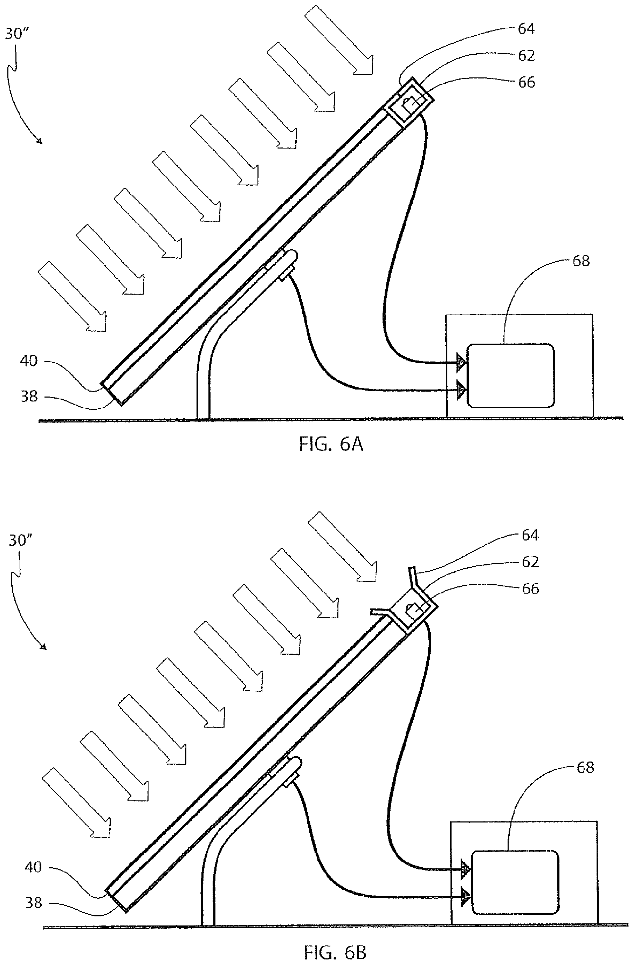

Figure 6A illustrates a solar module 30" capable of determining when a cleaning operation is required. The solar module 30" comprises a housing 62 which is located adjacent the front plate 40 of the solar module 30" The housing 62 is dust free and includes an openable shutter 64 which is normally closed in order to prevent any dust from entering the housing 62 The housing includes a light sensor 66 which is oriented in the same direction as the front plate 40 in order to receive the same solar intensity as the front plate 40 The light sensor 66 and the solar module 30" is connected to a control circuit 68.

Figure 6B illustrates a solar module 30" capable of determining when a cleaning operation is required When a determination is desired, the shutter 64 is briefly opened in order for the control circuit 68 to receive a value from the light sensor 66 corresponding to the solar intensity at the front plate 40. At the same time, the control circuit 68 receives from each solar module a value corresponding to the electrical energy produced by the solar module Thus, a ratio may be calculated between the solar energy produced by each solar module and the solar intensity at the front plate of each module 30" The control circuit may be calibrated such that for a given light intensity the ratio is considered to be 100% when the front plate 40 of the solar panel is absolutely dust free. Any dust on the front surface will contribute to a reduction of the energy production of the solar module and thus to a decrease of the ratio Thus, when the determined ratio falls below a predetermined ratio, e.g. 50%, 60%, 70%, 80%, 90% or 95%, the control circuit 68 determines that a cleaning operation is to be started. It should be noted that since the solar intensity may be considered to be equal over a certain area, the housing including the light sensor may not be necessary for each solar module of a solar array It may be sufficient to provide every 10^{th} or every 100^{th} of the solar modules with a light sensor 66. The current value may however be received from every solar module in order to only clean the dusted solar modules which deliver a reduced amount of energy.

Typical systems that describe more details and examples of varieties of the embodiment of the present invention are given below

### List of parts with reference to the figures:

- 10.: Road
- 12.: Transmission line
- 14.: Mini grid (Road lighting system)
- 16.: Lamp (LED)
- 18.: Service tank and service area
- 20.: Telecom station
- 22.: Billboard with lights
- 24.: Telecommunications tower
- 26.: Water station
- 28.: Energy oasis/Power Oasis/RE hub
- 30.: Solar module
- 32.: Cable
- 34.: Battery storage station
- 36.: Holder
- 38.: Back plate
- 40.: Front plate
- 42.: Control unit
- 44.: Regulator
- 46.: Inverter
- 48.: Solar cells
- 50.: Pressure pipe
- 52.: Conduit
- 54.: Nozzle
- 56.: Outwardly oriented surface
- 58.: Tank
- 60.: Heat absorber
- 62.: Housing
- 64.: Shutter
- 66.: Light sensor
- 68.: Control circuit

### Proof of concept example prototypes and presently preferred components.

### [DESIGN CRITERIA AS PROVIDED]

Motorway Data:
North bound 2 lanes total width: 12 meters
South bound 2 lanes total width: 12 meters

Lighting Requirements:
LED luminaires: 130Watt or Less per unit
Power Factor: >0.99
White Light. 5000k-5500K, Ra>70
Pole Spacing (North & South bound. 30 meters
Pole Height: 12 meters
Minimum Illumination @ 100% Brightness: 10 Lux
Maximum Illumination @ 100% Brightness: 20 Lux
Luminaires Operating Time: 10 Hours per night
Zero Energy Micro Grid Power Station Requirements.
Battery Storage Capacity: 2 Nights Operation (20 hours)
Maximum Micro Grid Power Lines Length: 10km
Micro Grid Voltage: 3-Phase 230/400VAC 50 Hz
PV Panels Bank - Battery charging capacity: as required

### ENERGY REQUIRMENTS FOR DESIGN OPTION -"A"

For: 10 km MICRO GRID SYSTEM + 668 Luminaires at 100% Brightness for 10 Hours

| | |
|---|---|
| 1) 668 Luminaires. NN 130W -- Power Demand | 86 84 kW |
| 2) Power Demand with 10% Power Lines Losses | 96.05 kW |
| 3) Current Draw from 120kW 3-Phase Inverter 230v/400V (per each Phase) | 139.2 A |
| 4) Power Loss in the Inverter and Output Transformer (5%) | 5.0 kW |
| 5) Current Draw from Battery Storage at 240VD | 421 Amps |
| 6) System Energy Consumption @ 10Hrs per night from Battery Storage | 1,010 kWh |
| 7) Battery Storage Energy Capacity Requiremen | 2,000 kWh |
| 8) PV Bank Pk Power Requirement (with 2 axis tracking+ Without Doubler of Solar Power) | 140 kW |

Data for:
Location: 27°56'12" North, 32°12'48" East, Elevation: 719 m a.s.l,
Nearest city: Asyut, Egypt (64 km away)
Nominal power of the PV system: 140.0 kW (thin film)
Inclination of modules: 26.0°
Orientation (azimuth) of modules: 0.0°
Estimated losses due to temperature: 8% (generic value for areas without temperature information or for PV modules with unknown temperature dependence)
Estimated loss due to angular reflectance effects: 2.5%
Other losses (cables, inverter etc.): 0%
Combined PV system losses: 20.5%

Estimated Cost of key equipment parts of this" 10km-100% Brightness System":

| | |
|---|---|
| -Luminaires: 668 @ USD | USD |
| -2-100 kW 3-Phase Inverters with Isolation Transformers | USD |
| -2,000 kWh Battery Storage System | USD |
| -150kW Battery Charger (240 VDC) | USD |
| -140kW PV Panels | USD |

### ENERGY REQUIRMENTS FOR DESIGN CRITERIA - OPTION "B" 10Lux MIN.

For: 10 km MICRO GRID SYSTEM
-- 668 Luminaires at 100% Brightness for 4 Hours ("4 Hr 100%LOAD")
-- 668 Luminaires at 50% Brightness for 6 Hours ("6 Hr 50%LOAD")

| | |
|---|---|
| 1) 668 Luminaires: NN 130W -- Power Demand (4 Hr 1 00%LOAD) | 86.84 kW |
| 2) Power Demand with 10% Power Lines Losses (4 Hr100% LOAD) | 96.05 kW |
| 3) System Energy Consumption During 4 Hr 100% LOAD | 384.2 kWh |
| 4) 668 Luminaires. NN 65W -- Power Demand (6 Hr 50% LOAD) | 50.10 kW |
| 5) Power Demand with 10% Power Lines Losses (6 Hr 50% LOAD | 55.66 kW |
| 6) System Energy Consumption During 6 Hr 50% LOAD | 333.96 kWh |
| 7) Current Draw from 120kW 3-Phase Inverter 230v/400V (per each Phase-4Hr Load) | 139.2 Amps |
| 8) Current Draw from 120kW 3-Phase Inverter 230v/400V (per each Phase-6Hr Load | 80.6 Amps |
| 9) Power Loss in the Inverter and Output Transformer (5%) | 5.0 kW |
| 10 Energy Loss in Output Transformer | 50 kWh |
| 11) Current Draw from Battery Storage at 240VDC (4 Hr 100% LOAD) | 421 Amps |
| 12) Current Draw from Batter Storage at 240VDC (6 Hr 50% LOAD | 250 Amps |
| 6) System Energy Consumption @ 10Hrs per night from Battery Storage | 767 kWh |
| 7) Battery Storage Energy Capacity Requirement | 1,535 kWh |
| 8) PV Bank Pk Power Requirement (with 2 axis tracking+ Without Doubler of Solar Power) | 100 kW |

Data for:
Location: 27°56'12" North, 32°12'48" East, Elevation: 719 m a.s l,
Nearest city: Asyut, Egypt (64 km away)
Nominal power of the PV system: 100.0 kW (thin film)
Inclination of modules: 26.0°
Orientation (azimuth) of modules: 0.0°
Estimated losses due to temperature: 8% (generic value for areas without temperature information or for PV modules with unknown temperature dependence)
Estimated loss due to angular reflectance effects: 25%
Other losses (cables, inverter etc) 0%
Combined PV system losses: 20.5%

Estimated Cost of key equipment parts of this "10km-100%/50% Brightness System":
- Luminaires: 668 @ USD
- 100 kW 3-Phase Inverter with Isolation Transformer
- 1,500 kWh Battery Storage System
- 120kW Battery Charger (240 VDC)
- 100kW PV Panels

### ENERGY REQUIRMENTS FOR DESIGN CRITERIA - OPTION "C" -7Lux MIN

For: 10 km MICRO GRID SYSTEM + 668 Luminaires at 100% Brightness for 10 Hours

| | |
|---|---|
| 1) 668 Luminaires. NN 85W -- Power Demand | 56.78 kW |
| 2) Power Demand with 10% Power Lines Losses | 63.08 kW |
| 3) Power Loss in the inverter and Output Transformer (5%) | 3.32 kW |
| 4) Current Draw from 100kW 3-Phase Inverter 230v/400v(per each Phase) | 97.0 Amps |
| 4) Energy Loss in Inverter and Output Transformer (5%) | 33.2 kWh |
| 5) Current Draw from Battery Storage at 240VDC | 276 Amps |
| 6) System Energy Consumption @ 1 0Hrs per night from Battery Storage | 700 kWh |
| 7) Battery Storage Energy Capacity Requirement | 1400 kWh |
| 8) PV Bank Pk Power Requirement (with 2 axis tracking+ Without Doubler of Solar Power) | 90 kW |

Data for:
Location: 27°56'12" North, 32°12'48" East, Elevation: 719 m a s.l,
Nearest city: Asyut, Egypt (64 km away)
Nominal power of the PV system: 90.0 kW (thin film)
Inclination of modules: 26.0°
Orientation (azimuth) of modules: 0.0°
Estimated losses due to temperature: 8% (generic value for areas without temperature
information or for PV modules with unknown temperature dependence)
Estimated loss due to angular reflectance effects: 2.5%
Other losses (cables, inverter etc): 0%
Combined PV system losses: 20.5%

Estimated Cost of key equipment parts of this "10km-100% Brightness 7 Lux Min System":
- Luminaires: 668
- 100 kW 3-Phase Inverter with Isolation Transformer
- 1,400 kWh Battery Storage System
- 100kW Battery Charger (240 VDC)
- 100kW PV Panels

Minimized Power Line Losses: "5km + 5km System"

The recommended wire for each 5 km lines should be low resistance wire.
- Rk = 0.2 Ohm/km is a good choice
- It can be "Bare Aluminium-Steel Stranded" type with AI/Fe Ration 8.1
- Insulated Aluminium or Alloy can be used, as well..
- All PV and Inverter hook-up wires should be of the copper type.

### Inverter Selections:

FOR OPTIONS "B" and "C": SG100

### General Descriptions.

SG100K3 is using low-frequency isolation transformers for outdoor applications. It can be continuously operating at rated power under +55C without derating It is the ideal product used for string-connected large PV power station to simplify PV power plant design. In addition, a wider input voltage range ensures more combinations of the PV arrays. It is one of the highest cost-effective grid-connected inverters in the world. Technical Features:
- Wide DC input voltage range with max. 1000V (optional)
- Max efficiency at 97 0%
- MPPT efficiency > 99.9%
- Using advanced IGBT modules
- Full protective functions
- Easy Installation and maintenance
- Precise output power metering
- Multilingual LCD display & multiple communication interfaces
- Auxiliary heater (optional)
- Max. working altitude at 6000m
- Low voltage ride through, reactive and active power control
- KEMA DK5940, TuV CE certifications

Communications:
- RS485/Ethernet/GPRS interfaces
- Computer monitoring software

Safety:
Full protection functions: over-voltage protection, short-circuit protection, islanding protection, over-heat protection

### Over-load protection

Standards complied: EN61000-6-1, EN61000-6-2, EN61000-6-3, EN61000-6-4,EN61000-3-2, EN61000-3-3, EN60164-1-1,EN55022, EN50178, DK5940, TuV FOR OPTION : "A". 2 UNITS -SG25, EACH POWERS 5km SECTION

### General Descriptions:

SG100 is using low-frequency isolation transformers for outdoor applications. It can be continuously operating at rated power under +55 C without derating. It is the ideal product used for string-connected large PV power stations to simplify PV power plant design. In addition, a wider input voltage range ensures more combinations of the PV arrays It is one of the highest cost-effective grid-connected inverters in the world.

### Technical Features:

- Wide DC input voltage range with max 1000V (optional)
- Max. efficiency at 97 0%
- MPPT efficiency > 99 9%
- Using advanced IGBT modules
- Full protective functions
- Easy installation and maintenance
- Precise output power metering
- Multilingual LCD display & multiple communication interfaces
- Auxiliary heater (optional)
- Max. working altitude at 6000m
- Low voltage ride through, reactive and active power control
- KEMA DK5940, TuV CE certifications

Communications:
- RS485/Ethernet/GPRS interfaces
- Computer monitoring software

### Safety

Full protection functions: over-voltage protection, short-circuit protection, islanding protection, over-heat protection
- Over-load protection
- Standards complied with: EN61000-6-1, EN61000-6-2, EN61000-6-3, EN61000-6-4,EN61000-3-2, EN61000-3-3, EN60164-1-1,EN55022, EN50178, DK5940, TuV

Battery Storage System - General Description
NN (USA) and NNChina will provide battery storage systems with use of state of the art
Lithium Iron Phosphate battery cells
--Nominal Charge/Discharge Voltage of 240 VDC
--Battery Cells Assembly Parallel and Series into Power Packs of 3600 Ah capacity
--Cells and Power Packs made and assembled by:
   --Battery Monitoring System controls and monitors Charging, Discharging and Capacity

Battery Charge Controllers
Provided as 28.8kW modules SCP by NN

Inverter: Apollo G-530 /GTP-530 from the company LEONICS

Visual Roadway Lighting Tool - Morocco Highway Design

The SOLARCON SCP-series charge controller is an advanced PV charger with microprocessor control for professional use The charger is equipped with LCD display and front panel for high precision setting. The SCP-series is also integrated with digital meter and 180 days power and event logger

The Xtreme Power™ System enables more efficient use of power generation and transmission & distribution resources The Xtreme Power™ System offers many benefits, including enabling the effective integration of renewable resources with the existing grid, the supply of numerous ancillary services, the elimination or reduction of new transmission and distribution lines, and reduced consumption of fossil fuels and the associated emissions and water consumption.

X Power offers a utility-scale Dynamic Power Resource'M (DPR'M), ideal for a variety of applications The DPR'M 15-100C is a standard, containerized unit comprised of 15 MW of full four-quadrant power electronics, 1 MWh of hyper-effiencient energy storage technology, and a versatile, programmable control system, all integrated to operate with your specific generation, grid, or load application

PVS cell solar batteries are low maintenance and used to store electric energy in medium and large solar photovoltaic installations

**Comparison (100W LED Lamp and 250W Conventional Street Lamp)**

| | LED Street Lamp | Conventional Street Lamp |
|---|---|---|
| Lamp Power (W) | 100 W | 250 W |
| Life Time (h) | 50.000 - 100.000 h | 1 000 - 5 000 h |
| Voltage Range (V) | 85-265 V or 12/24 V | 230 V |
| Efficiency (%) | 85 % | 65 % |
| Warranty | 3 Years | 1 Year |
| CRI | 70 - 80 | 20 - 30 |
| Starting Time (min) | 0 | 5 - 10 |
| Vibration sensity | None | Very sensitive |
| CE Standard | YES | YES |
| Environment | No Gas | Gas, lead |
| Temp Rise | < 20 °C | Up to 300 °C |
| Opt. Solar Panel | YES | NO |

## Claims

1. A solar module (30) comprising:
a shallow enclosure (62) comprising a back plate (38) and a corresponding front plate (40), said front plate (40) being transparent to solar light and defining an inwardly oriented surface and an outwardly oriented surface (56),
a plurality of solar cells (48) being accommodated between said front plate (40) and said back plate (38) and adjacent said inwardly oriented surface of said front plate (40), said solar cells (48) being exposed to solar light at said front plate (40),
a nozzle (54) being fixedly mounted on said outwardly oriented surface (56) of said front plate (40) or on a frame located at said outwardly oriented surface (56) of said front plate (40), said nozzle (54) being adapted to generate an air stream, across said outwardly oriented surface (56) of said front plate (40) and having an overall flow direction parallel to said front plate (40) for removing dust from said outwardly oriented surface (56) of said front plate (40),
a pressurization system (50) connected to said nozzle (54) adapted to supply said nozzle (54) with pressurized air,
a control valve having a closed state preventing air from flowing from said pressurization system (50) to said nozzle (54) and an open state allowing air to flow from said pressurization system (50) to said nozzle (54). **characterized in that**
a light sensor (66) located in a dust free location, said light sensor (66) being adapted to generate a light intensity value corresponding to the intensity of the solar light at said outwardly oriented surface (56) of said front plate (40), and
a control circuit (68) adapted to generate an energy value corresponding to the energy generated by said plurality of solar cells (48), said control circuit (68) being adapted to calculate a ratio between said energy value and said light intensity value, said control circuit (68) being adapted to cause said control valve to assume said open state when said ratio falls below a predetermined ratio, said light sensor (66) is located-within a sealed enclosure (62), said sealed enclosure (62) being adapted to periodically expose said light sensor (66) to solar light.

2. The solar module (30) according to claim 1, wherein said pressurization system (50) comprises an air tank (58) adapted to store a specific volume of air at atmospheric pressure, said air tank (58) being located adjacent said back plate (38) for receiving solar heat energy from said solar cells (48) for heating said specific volume of air thereby causing said specific volume of air to assume an elevated pressure.

3. The solar module (30) according to claim 2, wherein said air tank (58) comprises a connector for connecting said air tank (58) to a corresponding air tank (58) of a neighbouring solar module (30).

4. The solar module (30) according to any of the preceding claims, wherein said predetermined ratio is between 50% and 99%, preferably between 60% and 95%, more preferably between 70% and 90%, most preferably between 75% and 85%, such as 80%.

5. The solar module (30) according to any of the preceding claims, wherein said solar module (30) further comprises heat absorbers located within said shallow enclosure (62) between said solar cells (48) and said back plate (38).

6. The solar module (30) according to any of the preceding claims, wherein said outwardly oriented surface (56) defines a slope from a lower edge to an upper edge, said solar module (30) including a matrix of nozzles (54) from said lower edge to said upper edge, said nozzles (54) being fixedly mounted on said outwardly oriented surface (56) of said front plate (40) or on a frame located at said outwardly oriented surface (56) of said front plate (40), said nozzles (54) being adapted to generate an air stream, preferably a laminar air stream, across said outwardly oriented surface (56) of said front plate (40) and having an overall flow direction parallel to said front plate (40) and from said upper edge to said lower edge for removing dust from said outwardly oriented surface (56) of said front plate (40).

7. A method of operating a solar module (30), said solar module (30) comprising:
a shallow enclosure (62) comprising a back plate (38) and a corresponding front plate (40), said front plate (40) being transparent to solar light and defining an inwardly oriented surface and an outwardly oriented surface (56),
a plurality of solar cells (48) being accommodated between said front plate (40) and said back plate (38) and adjacent said inwardly oriented surface of said front plate (40), said solar cells (48) being exposed to solar light at said front plate (40),
a nozzle (54) being fixedly mounted on said outwardly oriented surface (56) of said front plate (40) or on a frame located at said outwardly oriented surface (56) of said front plate (40), said nozzle (54) being adapted to generate an air stream, preferably a laminar air stream, across said outwardly oriented surface (56) of said front plate (40) and having an overall flow direction parallel to said front plate (40) for removing dust from said outwardly oriented surface (56) of said front plate (40),
a pressurization system (50) connected to said nozzle (54) adapted to supply said nozzle (54) with pressurized air,
a control valve having a closed state preventing air from flowing from said pressurization system (50) to said nozzle (54) and an open state allowing air to flow from said pressurization system (50) to said nozzle (54) **characterized in that**
a light sensor (66) located in a dust free location within a sealed enclosure (62), said sealed enclosure (62) being adapted to periodically expose said light sensor (66) to solar light, said light sensor (66) being adapted to generate a light intensity value corresponding to the intensity of the solar light at said outwardly oriented surface (56) of said front plate (40), and
a control circuit (68) adapted to generate an energy value corresponding to the energy generated by said plurality of solar cells (48), said control circuit (68) being adapted to calculate a ratio between said energy value and said light intensity value, said control circuit (68) being adapted to cause said control valve to assume said open state when said ratio falls below a predetermined ratio said method comprising the steps of:
opening said control valve thereby allowing air to flow from said pressurization system (50) to said nozzle (54) and generate an air stream across said outwardly oriented surface (56) of said front plate (40) and having an overall flow direction parallel to said front plate (40) for removing dust from said outwardly oriented surface (56) of said front plate (40), and
closing said control valve.

## Patentansprüche

1. Solarmodul (30) umfassend:
ein flaches Gehäuse (62) umfassend eine Hinterplatte (38) und eine entsprechende Vorderplatte (40), wobei die Vorderplatte (40) für Sonnenlicht durchlässig ist und eine einwärts gerichtete Oberfläche und eine auswärts gerichtete Oberfläche (56) absteckt,
eine Mehrheit von Solarzellen (48), die zwischen der Vorderplatte (40) und der Hinterplatte (38) und anliegend an der einwärts gerichteten Oberfläche der Vorderplatte (40) angepasst ist, wobei die Solarzellen (48) auf der Vorderplatte (40) Sonnenlicht ausgesetzt werden,
eine Düse (54), die fest montiert ist auf der auswärts gerichteten Oberfläche (56) der Vorderplatte (40) oder auf einem Gerüst, das auf der auswärts gerichteten Oberfläche (56) der Vorderplatte (40) angeordnet ist, wobei die Düse (54) so angepasst ist, dass sie einen Luftstrom hinüber die auswärts gerichtete Oberfläche (56) der Vorderplatte (40) erzeugt und eine gesamte Fliessrichtung parallel zu der Vorderplatte (40) hat, um Staub von der auswärts gerichteten Oberfläche (56) der Vorderplatte (40) zu entfernen,
ein mit der Düse (54) verbundenes Druckbeaufschlagungssystem (50), das so angepasst ist, dass es Druckluft zur Düse (54) versorgt,
ein Regelventil mit einer geschlossenen Stellung zur Verhinderung davon, dass Luft vom Druckbeaufschlagungssystem (50) zur Düse (54) fliesst, und einer offenen Stellung zur Zulassung davon, dass Luft vom Druckbeaufschlagungssystem (50) zur Düse (54) fliesst, **gekennzeichnet durch**
ein in einer staubfreien Lage angesiedeltes Lichtsensor (66), das so angepasst ist, dass es einen Lichtintensitätswert erzeugt, der der Intensität des Sonnenlichts an der auswärts gerichteten Oberfläche (56) der Vorderplatte (40) entspricht, und
einen Steuerkreis (68), der so angepasst ist, dass er einen Energiewert erzeugt, der der aus der Mehrheit von Solarzellen (48) erzeugten Energie entspricht, wobei der Steuerkreis (68) so angepasst ist, dass er ein Verhältnis zwischen dem Energiewert und dem Lichtintensitätswert berechnet, wobei der Steuerkreis (68) so angepasst ist, dass er dem Regelventil dazu veranlasst die offene Stellung einzunehmen, wenn das Verhältnis niedriger als ein vorbestimmtes Verhältnis wird, wobei das Lichtsensor (66) in einem verschlossenen Gehäuse (62) angesiedelt ist, wobei das verschlossene Gehäuse (62) so angepasst ist, dass es dem Lichtsensor (66) periodisch Sonnenlicht aussetzt.

2. Solarmodul (30) nach Anspruch 1, wobei das Druckbeaufschlagungssystem (50) einen Luftbehälter (58) umfasst, der dafür angepasst ist, ein bestimmtes Luftvolumen in atmosphärischem Druck aufzubewahren, wobei der Luftbehälter (58) anliegend an der Hinterplatte (38) angesiedelt ist für den Empfang von Solarwärmeenergie von den Solarzellen (48) um das bestimmte Luftvolumen aufzuwärmen, wobei es veranlasst wird, dass das bestimmte Luftvolumen einen erhöhten Druck annimmt.

3. Solarmodul (30) nach Anspruch 2, wobei der Luftbehälter (58) einen Verbinder umfasst für die Verbindung des Luftbehälters (58) zu einem entsprechenden Luftbehälter (58) eines benachbarten Solarmoduls (30).

4. Solarmodul (30) nach einem jeglichen der vorherstehenden Ansprüche, wobei das vorbestimmte Verhältnis zwischen 50% und 99% liegt, bevorzugt zwischen 60% und 95%, mehr bevorzugt zwischen 70% und 90%, noch mehr bevorzugt zwischen 75% und 85%, wie z. B. 80%.

5. Solarmodul (30) nach einem jeglichen der vorherstehenden Ansprüche, wobei das Solarmodul (30) ausserdem Wärmeabsorber umfasst, die in dem flachen Gehäuse (62) zwischen den Solarzellen (48) und der Hinterplatte (38) angesiedelt sind.

6. Solarmodul (30) nach einem jeglichen der vorherstehenden Ansprüche, wobei die auswärts gerichtete Oberfläche (56) eine Steigung von einem unteren Rand zu einem oberen Rand absteckt, wobei das Solarmodul (30) eine Matrix von Düsen (54) vom unteren Rand zum oberen Rand umfasst, wobei die Düsen (54) fest montiert auf der auswärts gerichteten Oberfläche (56) der Vorderplatte (40) sind, oder auf einem Gerüst, das an der auswärts gerichteten Oberfläche (56) der Vorderplatte (40) angesiedelt ist, wobei die Düsen (54) so angepasst sind, dass sie einen Luftstrom, bevorzugt einen laminaren Luftstrom, über die auswärts gerichtete Oberfläche (56) der Vorderplatte (40) erzeugen und eine gesamte Fliessrichtung parallel zu der Vorderplatte (40) und vom oberen Rand zum unteren Rand haben für die Entfernung von Staub von der auswärts gerichteten Oberfläche (56) der Vorderplatte (40).

7. Verfahren zum Betrieb eines Solarmoduls (30), wobei das Solarmodul (30) umfasst:
ein flaches Gehäuse (62) umfassend eine Hinterplatte (38) und eine entsprechende Vorderplatte (40), wobei die Vorderplatte (40) für Sonnenlicht durchlässig ist und eine einwärts gerichtete Oberfläche und eine auswärts gerichtete Oberfläche (56) absteckt,
eine Mehrheit von Solarzellen (48), die zwischen der Vorderplatte (40) und der Hinterplatte (38) und anliegend an der einwärts gerichteten Oberfläche der Vorderplatte (40) angepasst ist, wobei die Solarzellen (48) auf der Vorderplatte (40) Sonnenlicht ausgesetzt sind,
eine Düse (54), die fest montiert ist auf der auswärts gerichteten Oberfläche (56) der Vorderplatte (40) oder auf einem Gerüst, das auf der auswärts gerichteten Oberfläche (56) der Vorderplatte (40) angeordnet ist, wobei die Düse (54) so angepasst ist, dass sie einen Luftstrom, bevorzugt einen laminaren Luftstrom, hinüber die auswärts gerichtete Oberfläche (56) der Vorderplatte (40) erzeugt und eine gesamte Fliessrichtung parallel zu der Vorderplatte (40) hat, um Staub von der auswärts gerichteten Oberfläche (56) der Vorderplatte (40) zu entfernen,
ein mit der Düse (54) verbundenes Druckbeaufschlagungssystem (50), das so angepasst ist, dass es Druckluft zur Düse (54) versorgt,
ein Regelventil mit einer geschlossenen Stellung zur Verhinderung davon, dass Luft vom Druckbeaufschlagungssystem (50) zur Düse (54) fliesst, und einer offenen Stellung zur Zulassung davon, dass Luft vom Druckbeaufschlagungssystem (50) zur Düse (54) fliesst, **gekennzeichnet durch**
ein in einem verschlossenen Gehäuse in einer staubfreien Lage angesiedeltes Lichtsensor (66), wobei das verschlossene Gehäuse so angepasst ist, dass es dem Lichtsensor (66) periodisch Sonnenlicht aussetzt, und wobei das Lichtsensor (66) so angepasst ist, dass es einen Lichtintensitätswert erzeugt, der der Intensität des Sonnenlichts an der auswärts gerichteten Oberfläche (56) der Vorderplatte (40) entspricht, und
einen Steuerkreis (68), der so angepasst ist, dass er einen Energiewert erzeugt, der der aus der Mehrheit von Solarzellen (48) erzeugten Energie entspricht, wobei der Steuerkreis (68) so angepasst ist, dass er ein Verhältnis zwischen dem Energiewert und dem Lichtintensitätswert berechnet, wobei der Steuerkreis (68) so angepasst ist, dass er dem Regelventil dazu veranlasst die offene Stellung einzunehmen, wenn das Verhältnis niedriger als ein vorbestimmtes Verhältnis wird, wobei das Verfahren die folgenden Schritte umfasst:
Öffnung des Regelventils um zuzulassen, dass Luft vom Druckbeaufschlagungssystem (50) zur Düse (54) fliesst und einen Luftstrom hinüber die auswärts gerichtete Oberfläche (56) der Vorderplatte (40) erzeugt und eine gesamte Fliessrichtung parallel zu der Vorderplatte (40) hat, um Staub von der auswärts gerichteten Oberfläche (56) der Vorderplatte (40) zu entfernen, und
Schliessung des Regelventils.

## Revendications

1. Module solaire (30) comprenant:
un boîtier de faible profondeur (62) comprenant une plaque arrière (38) et une plaque avant correspondante (40), ladite plaque avant (40) étant transparente à la lumière solaire et définissant une surface dirigée vers l'intérieur et une surface dirigée vers l'extérieur (56),
une pluralité de cellules solaires (48) étant aménagées entre ladite plaque avant (40) et ladite plaque arrière (38) et adjacentes à ladite surface dirigée vers l'intérieur de ladite plaque avant (40), lesdites cellules solaires (48) étant exposées à la lumière solaire à ladite plaque avant (40),
un distributeur (54) étant monté de manière fixe sur ladite surface dirigée vers l'extérieur (56) de ladite plaque avant (40) ou sur une structure située à ladite surface dirigée vers l'extérieur (56) de ladite plaque avant (40), ledit distributeur (54) étant adapté pour générer un flux d'air au travers ladite surface dirigée vers l'extérieur (56) de ladite plaque avant (40) et ayant une direction de flux globale parallèle à ladite plaque avant (40) pour éliminer de la poussière de ladite surface dirigeée vers l'extérieur (56) de ladite plaque avant (40),
un système de pressurisation (50) connecté audit distributeur (54) adapté pour alimenter ledit distributeur (54) avec de l'air pressurisé,
une vanne de contrôle ayant un état fermé empêchant l'air de couler dudit système de pressurisation (50) audit distributeur (54) et un état ouvert permettant à l'air de couler dudit système de pressurisation (50) audit distributeur (54), **caractérisé en ce que**
un détecteur de lumière (66) placé dans un lieu sans poussière, ledit détecteur de lumière (66) étant adapté pour générer une valeur de luminosité correspondant à l'intensité de la lumière solaire à ladite surface dirigée vers l'extérieur (56) de ladite plaque avant (40), et
un circuit de contrôle (68) adapté pour générer une valeur énergétique correspondant à l'énergie générée par ladite pluralité de cellules solaires (48), ledit circuit de contrôle (68) étant adapté pour calculer un rapport entre ladite valeur énergétique et ladite valeur de la luminosité, ledit circuit de contrôle (68) étant adapté pour causer à ladite vanne de contrôle d'assumer ledit état ouvert lorsque ledit rapport tombe en dessous un rapport prédéterminé,
ledit détecteur de lumière (66) est placé à l'intérieur d'un boîtier étanche (62), ledit boîtier étanche (62) étant adapté à exposer périodiquement ledit détecteur de lumière (66) à la lumière solaire.

2. Module solaire (30) selon la revendication 1, où ledit système de pressurisation (50) comprend un réservoir d'air (58) adapté à stocker un volume spécifique d'air à une pression atmosphérique, ledit réservoir d'air (58) étant placé adjacent à la plaque arrière (38) afin de recevoir de l'énergie thermique solaire desdites cellules solaires (48) pour chauffer ledit volume spécifique d'air, causant ainsi audit volume spécifique d'air d'assumer une pression élevée.

3. Module solaire (30) selon la revendication 2, où ledit réservoir d'air (58) comprend un connecteur pour connecter ledit réservoir d'air (58) à un réservoir d'air correspondant (58) d'un module solaire avoisinant (30).

4. Module solaire (30) selon l'une quelconque des revendications précédentes, où ledit rapport prédéterminé se situe entre 50% et 99%, préférablement entre 60% et 95%, plus préférablement entre 70% et 90%, encore plus préférablement entre 75% et 85%, tel que 80%.

5. Module solaire (30) selon l'une quelconque des revendications précédentes, où ledit module solaire (30) comprend en outre des absorbeurs de chaleur à l'intérieur dudit boîtier de faible profondeur (62) entre lesdites cellules solaires (48) et ladite plaque arrière (38).

6. Module solaire (30) selon l'une quelconque des revendications précédentes, où ladite surface dirigée vers l'extérieur (56) définit une inclinaison d'un bord inférieur à un bord supérieur, ledit module solaire (30) incluant une matrice de distributeurs (54) dudit bord inférieur audit bord supérieur, lesdits distributeurs (54) étant montés de manière fixe sur ladite surface dirigée vers l'extérieur (56) de ladite plaque avant (40) ou sur une strucutre placée à ladite surface dirigée vers l'extérieur (56) de ladite plaque avant (40), lesdits distributeurs (54) étant adaptés à générer un flux d'air, de préférence un flux d'air laminaire, au travers ladite surface dirigée vers l'extérieur (56) de ladite plaque avant (40) et ayant une direction de flux globale parallèle à ladite plaque avant (40) et dudit bord supérieur audit bord inférieur pour éliminer de la poussière de ladite surface dirigée vers l'extérieur (56) de ladite plaque avant (40).

7. Procédé d'opération d'un module solaire (30), ledit module solaire (30) comprenant:
un boîtier de faible profondeur (62) comprenant une plaque arrière (38) et une plaque avant correspondante (40), ladite plaque avant (40) étant transparente à la lumière solaire et définissant une surface dirigée vers l'intérieur et une surface dirigée vers l'extérieur (56),
une pluralité de cellules solaires (48) étant aménagées entre ladite plaque avant (40) et ladite plaque arrière (38) et adjacentes à ladite surface dirigée vers l'intérieur de ladite plaque avant (40), lesdites cellules solaires (48) étant exposées à la lumière solaire à ladite plaque avant (40),
un distributeur (54) étant monté de manière fixe sur ladite surface dirigée vers l'extérieur (56) de ladite plaque avant (40) ou sur une structure située à ladite surface dirigée vers l'extérieur (56) de ladite plaque avant (40), ledit distributeur (54) étant adapté pour générer un jet d'air au travers ladite surface dirigée vers l'extérieur (56) de ladite plaque avant (40) et ayant une direction de débit globale parallèle à ladite plaque avant (40) pour éliminer de la poussière de ladite surface dirigeée vers l'extérieur (56) de ladite plaque avant (40),
un système de pressurisation (50) connecté audit distributeur (54) adapté pour alimenter ledit distributeur (54) avec de l'air pressurisé,
une vanne de contrôle ayant un état fermé empêchant l'air de couler dudit système de pressurisation (50) audit distributeur (54) et un état ouvert permettant à l'air de couler dudit système de pressurisation (50) audit distributeur (54), **caractérisé en ce que**
un détecteur de lumière (66) placé dans un lieu sans poussière à l'intérieur d'un boîtier étanche (62), ledit boîtier étanche (62) étant adapté à exposer périodiquement ledit détecteur de lumière (66) à ladite lumière solaire, ledit détecteur de lumière (66) étant adapté à générer une valeur de luminosité correspondant à l'intensité de la lumière solaire à ladite surface dirigée vers l'extérieur (56) de ladite plaque avant (40), et
un circuit de contrôle (68) adapté pour générer une valeur énergétique correspondant à l'énergie générée par ladite pluralité de cellules solaires (48), ledit circuit de contrôle (68) étant adapté pour calculer un rapport entre la valeur énergétique et ladite valeur de la luminosité, ledit circuit de contrôle (68) étant adapté à causer à ladite vanne de contrôle d'assumer ledit état ouvert lorsque ledit rapport tombe en dessous un rapport prédéterminé,
ledit procédé comprenant les étapes de:
ouvrire ladite vanne de contrôle, permettant ainsi à l'air de circuler dudit système de pressurisation (50) audit distributeur (54) et de générer un flux d'air au travers ladite surface dirigée vers l'extérieur (56) de ladite plaque avant (40) et ayant une direction de flux globale parallèle à ladite plaque avant (40) pour éliminer de la poussière de ladite surface dirigeée vers l'extérieur (56) de ladite plaque avant (40), et
fermer ladite vanne de contrôle.
